# EUROPÄISCHE PATENTSCHRIFT

(11) **EP 0 439 731 B1**
(45) Veröffentlichungstag und Bekanntmachung des Hinweises auf die Patenterteilung: **28.06.1995**
(21) Anmeldenummer: 90123379.1
(22) Anmeldetag: 06.12.1990
(51) Int. Cl.: B01D 17/035, B01D 3/34

(54) **Verfahren zur thermischen Trennung einer Wasser/Ölemulsion**
Process for the thermal separation of a water/oil-emulsion
Procédé pour la séparation thermique d'une émulsion eau/huile

(30) Priorität: 07.12.1989 DE 8914167 U
(43) Veröffentlichungstag der Anmeldung: 07.08.1991
(73) Patentinhaber: Hopf, Karl-Heinz, D-95448 Bayreuth (DE)
(72) Erfinder: Hopf, Karl-Heinz, D-95448 Bayreuth (DE)
(74) Vertreter: Hafner, Dieter, Dr.rer.nat., Dipl.-Phys.

(56) Entgegenhaltungen:
- EP-A- 0 030 200
- BE-A- 633 303
- DE-A- 3 147 460
- DE-B- 1 205 219
- GB-A- 2 142 549
- US-A- 4 231 867
- E. Kirschbaum "Destillier- und Rektifiziertechnik" 3. Auflage, 1960, SPRINGER VERLAG, Berlin, Seiten 8-13

## Beschreibung

Die vorliegende Erfindung betrifft ein Verfahren zur thermischen Trennung einer Emulsion nach dem Oberbegriff des Anspruchs 1.

Ein derartiges Verfahren ist bereits in der GB-A-2 142 549 beschrieben. Es handelt sich hierbei um einen Destillationsapparat zur Trennung einer niedrig siedenden Fraktion von einem Flüssigkeitsgemisch. Der Betrieb des Apparates erfolgt bei Unterdruck, wodurch der Siedepunkt der abzutrennenden Fraktion herabgesetzt werden kann. Darüber hinaus wird während des Betriebs des Apparates das Flüssigkeitsgemisch an der Unterseite des Flüssigkeitsbehälters abgeführt und über eine Umwälzpumpe im oberen Bereich des Apparates in diesen wieder eingebracht. Über ein etwa in der Mitte des Flüssigkeitsvolumens angeordnetes, einzelnes Rohr wird Inertgas zugeführt, wodurch der Dampfpartialdruck des Destillats und damit der Verdampfungspunkt der zu verdampfenden Flüssigkeit reduziert werden kann.

Weiterhin ist aus der DE-A-3 147 460 ein Verfahren zur Trennung von flüssigen Gemischen durch Verdampfen und Kondensieren bekannt, bei dem über einen im unteren Drittel des Behälters angeordneten Siebboden ein Trägergas beispielsweise Kohlendioxid oder Stickstoff, eingebracht wird, wobei das Gas mit dem Dampf aus der Flüssigkeit gesättigt wird und einem Kondensator zugeleitet wird.

Dort erfolgt eine Kondensierung des Dampfes, wobei das Gas mit den Dampfresten zurück in den Verdampfer gefördert wird.

Aus der BE-A-633 303 ist eine Trennanlage zur Trennung eines Wasser/Ölgemisches bekannt, bei der das Gemisch in einem Wärmetauscher zunächst erhitzt und dann über eine Düse in einen Diffusor eingedüst wird. Gleichzeitig erfolgt ein intensiver Kontakt mit Luft, welche entlang des Diffusors durch den aus der Wasser/Ölmischung stammenden Wasserdampf gesättigt wird. In einem Auffangbehälter wird die mit Wasserdampf gesättigte Luft abgeführt.

In der DE-AS 12 05 219 wird ein Verfahren zum Brechen von Mineralöl-in-Wasser-Emulsionen und zur Gewinnung des Mineralöls und Wassers aus diesen Emulsionen vorgestellt. Bei diesem Verfahren werden Emulsionen der beschriebenen Art aufgebrochen, in dem ein Inertgas durch die erhitzten Emulsionen geleitet wird. Das durch Aufbrechung der Emulsion gewonnene freie Mineralöl steigt nun in einem Behälter nach oben und wird dort durch eine Leitung 13 abgezogen und einem Abscheider 14 zugeführt.

In E. Kirschbaum "Destilier- und Rektifiziertechnik", 3. Auflage, 1960, Springer Verlag, Berlin, Seiten 8 - 13 wird die Technik der "Wasserdampfdestilation" am Beispiel von unlöslichen Zweistoffgemischen ausführlich dargelegt.

Die Aufgabe der vorliegenden Erfindung besteht nun darin, ein Verfahren zur thermischen Trennung einer Wasser-/Ölemulsion zu schaffen, welches bei erhöhter Leistung einen vergleichsweise niedrigen Energiebedarf besitzt.

Diese Aufgabe wird durch den kennzeichnenden Teil des Patentanspruchs 1 gelöst. Die Unteransprüche betreffen zweckmäßige Ausgestaltungen der Erfindung. Es hat sich überraschenderweise, insbesondere bei der Trennung einer Wasser-/Ölemulsion gezeigt, daß durch flächig verteiltes Einleiten von Luft in die erwärmte Emulsion eine Wasserdampfschwadenbildung bei erheblich niedrigeren Temperaturen als der Siedetemperatur von Wasser einsetzt. Die Erfindung bewirkt einen optimalen Wirkungsgrad, da die Luftblasen das gesamte Volumen der Emulsion durchströmen können. Nach dem Anfahren nach einer nach dem erfindungsgemäßen Verfahren betriebenen Anlage kann die Abtrennung von Wasser damit schon bei einer wesentlich geringeren Temperatur der Emulsion erfolgen, folglich ist eine geringere Wärmezufuhr der Heizeinrichtung möglich. Auch im Bereich des Kondensators erfolgt eine Reduzierung des Energiebedarfs dahingehend, daß lediglich geringere Mengen an Restdampf kondensiert werden müssen. Ein weiterer Vorteil der Erfindung liegt darin, daß der stündliche Kondensatanfall etwa um 100% erhöht ist im Vergleich zum Stand der Technik. Die Erfindung stellt daher eine ganz erhebliche Maßnahme zur Energieeinsparung sowie Leistungssteigerung des Betriebs einer Phasentrennanlage dar.

Zweckmäßigerweise ist eine Rückführung vorgesehen, welche den Abzug mit der Einrichtung zur verteilten Einleitung von Luft verbindet. Das an der Oberfläche abgezogene Luft/Wasserdampfschwadengemisch wird zum Kondensator geleitet und von dort die übrig bleibende Luft in die Emulsion rückgeführt, was den Vorteil beinhaltet, daß die stark geruchsbelastete Abluft, welche den Kondensator normalerweise ins Freie verläßt, in einem geschlossenen System verbleibt und daher die Umwelt nicht belastet. Desweiteren geht der Wärmewert der Abluft nicht verloren, sondern wird dem System wieder zugeführt. Im übrigen wird durch diese Maßnahme der Lufthaushalt in einer Halle nicht belastet.

Dadurch, daß in der Rückführung ein Hochdruckgebläse angeordnet ist, wird eine hohe Lufteintrittsgeschwindigkeit in die Emulsion erreicht und dadurch die Wirksamkeit der Phasentrennung verbessert.

Die Eindüsung von Luft bewirkt bereits eine erhebliche Durchmischung der Emulsion und dadurch eine gleichmäßige Aufheizung der Emulsion. Eine Steigerung des Durchmischungsgrades läßt sich zweckmäßigerweise durch den Einsatz eines Rührwerks erzielen.

Eine weitere zweckmäßige Ausgestaltung sieht vor, daß eine Regelung der Temperatur der Heizeinrichtung in Abhängigkeit der jeweiligen Emulsionstemperatur vorgenommen wird. Hierdurch besteht die Möglichkeit, nach dem Anfahren der Anlage die Temperatur der Emulsion konstant zu halten, wenn der Effekt des Eindüsens der rückgeführten Luft bemerkbar wird.

Eine zweckmäßige Ausgestaltung einer Phasentrennanlage zur Durchführung des erfindungsgemäßen Verfahrens wird anhand der zeichnungen näher erläutert.

Es zeigen:
- Fig. 1: eine stark vereinfache, schematische Darstellung der Phasentrennanlage;
sowie
- Fig. 2: die Rohranordnung der Phasentrennanlage gemäß Fig. 1.

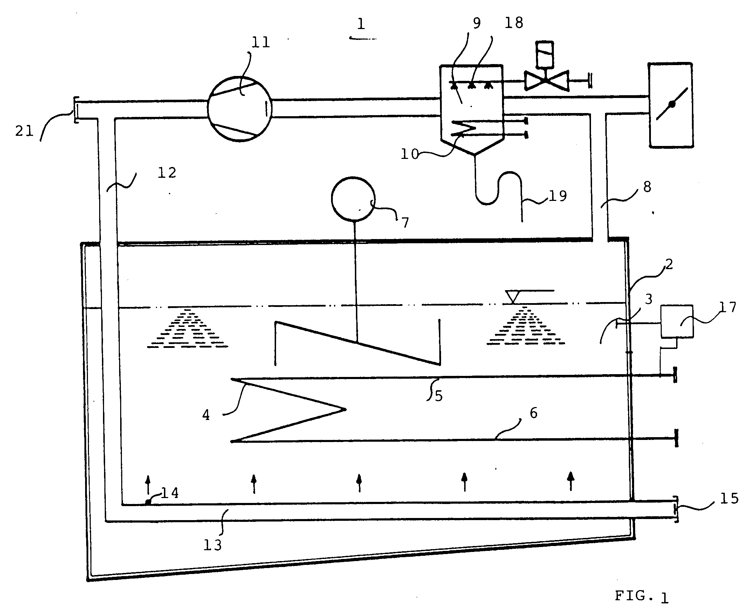

Gemäß Fig. 1 umfaßt die Phasentrennanlage 1 einen Behälter 2, dessen Wandungen mit einer nicht dargestellten Isolierung versehen sind. In dem Behälter 2 befindet sich eine aufzutrennende Emulsion, insbesondere Wasser/Ölemulsion.

Der Behälter 2 ist in etwa zu 4/5 seines Volumens mit Emulsion 3 gefüllt. Es ist notwendig, daß an der Oberseite der Emulsion ein gewisser Leerraum vorhanden ist.

Innerhalb der Emulsion befindet sich ein Heizelement 4, beispielsweise in Form eines warmwasserbetriebenen Wärmetauschers mit Zulauf 5 sowie Ablauf 6.

Desweiteren ist eine Einrichtung 17 zur Regelung der Temperatur des Heizelements 4 in Abhängigkeit der jeweiligen Emulsionstemperatur vorgesehen.

Die Anlage weist einen Abzug 8 auf, welcher an der Oberseite des Behälters 2 angeordnet ist und in den emulsionsleeren Raum des Behälters 2 bündig endet. Der Abzug 8 steht mit einem Kondensator 9 zur Kondensierung der dampfförmigen Bestandteile unter Einsatz eines Glattrohrwärmetauschers 10 sowie der mechanischen Abscheidung der Tröpfchen an dem Glattrohrwärmetauscher 10 sowie an nachgeschalteten (nicht dargestellten) Prallabscheidern in Verbindung. Der Glattrohrwärmetauscher 10 wird mittels einer Sprühdüsenanordnung 18 diskontinuierlich gereinigt. Das Kondensat wird über einen Siphon 19 einer (nicht dargestellten) Sammeleinrichtung zugeführt.

Ferner ist eine Rohranordnung 13 im Bodenbereich des Behälters 2 vorgesehen, welche über eine Rückführung 12, in die ein Hochdruckgebläse 11 integriert ist, mit dem Kondensator 9 verbunden ist. Die Rohranordnung 13 besteht aus einer Mehrzahl vorzugsweise parallel zueinander angeordneter Einzelrohre, welche an deren Oberseiten über die Länge des jeweiligen Rohres verteilt Austrittsöffnungen 14 aufweisen.

Die Rohranordnung 13 durchläuft an einer Stelle, d. h. einer Seite des Behälters 2 die Wandung des Behälters 2, so daß eine Seite der Rohrenden außerhalb des Behälters 2 sich befinden. Diese Rohrenden sind mit abnehmenbaren Verschlüssen 15 versehen.

Die Anlage 1 ist weiterhin mit einem Rührwerk 7 ausgestattet, welches eine verbesserte Turbulenz der Emulsion um das Heizelement 4 gewährleistet.

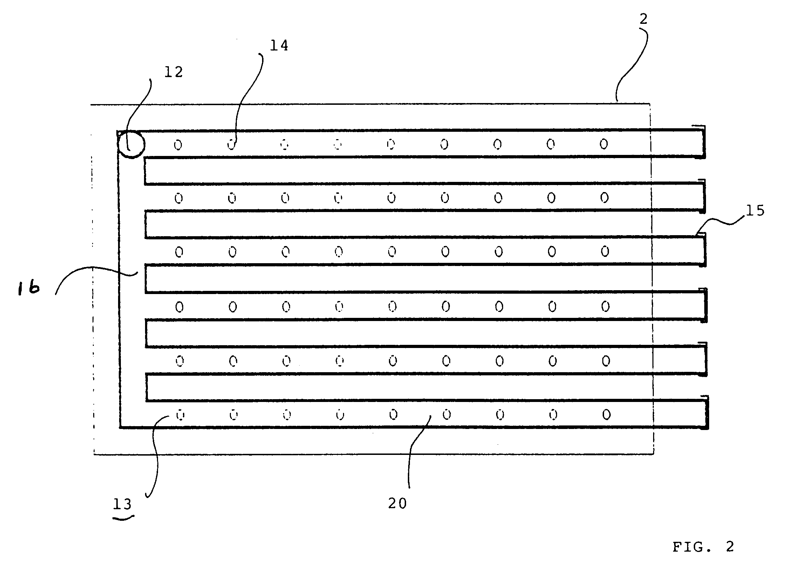

In Figur 2 ist die Rohranordnung 13 zum besseren Verständnis in Draufsicht dargestellt. Die Rohranordnung besteht aus einer Vielzahl von parallel zueinander verlaufenden einzelnen Rohren 20, deren Austrittsöffnungen 14 matrixartig verteilt die Querschnittsfläche des Behälters 2 füllen.

Innerhalb des Behälters 2 stehen die einzelnen Rohre 20 über die Querverbindung 16 miteinander in Verbindung, wobei die Querverbindung 16 gleichzeitig die Verbindung mit der Rückführung 12 gewährleistet.

Die außerhalb des Behälters befindlichen Enden der einzelnen Rohre 20 sind mit abnehmbaren Verschlüssen 15 versehen, welche eine einfache Reinigung der Rohranordnung 13 gewährleistet. Gemäß Fig. 1 ist in der Rückführung 12 ein Anschluß 21 vorgesehen, mittels welchem bei Bedarf eine separate Preßluftzuführung ermöglicht wird oder aber die rückgeführte Luft abgelassen werden kann.

Im folgenden wird das erfindungsgemäße Verfahren näher erläutert.

Zunächst wird die im Behälter 2 befindliche Emulsion, insbesondere eine Wasser/Ölemulsion mittels der Heizeinrichtung 4 auf eine Temperatur von z. B. 65°C gebracht. Anschließend wird im Leerraum des Behälters 2 abgesaugte Luft über das Hochdruckgebläse 11, die Rückführung 12 und die Querverbindung 16 in die Rohranordnung 13 gepreßt und über die Austrittsöffnungen 14 in die Emulsion 3 eingedüst. Hierdurch werden fein verteilte Lufbläschen in der Emulsion erzeugt, welche überraschenderweise den Effekt einer Schwadenbildung der abzutrennenden flüssigen Phase (insbesondere Wasser) schon bei wesentlich geringeren Temperaturen (bereits bei 55°C) als der Siedetemperatur von Wasser gewährleisten.

Nach Bedarf kann das Rührwerk 17 kontinuierlich oder diskontinuierlich betrieben werden, um eine erhöhte Durchmischung der Emulsion mit den einzelnen Luftbläschen zu gewährleisten.

Das erfindungsgemäße Verfahren leistet zum einen erheblichen Beitrag zur Entlastung der Umwelt, insbesondere wird die bei bekannten Anlagen starke Geruchsbelastung der Umwelt völlig vermieden, zum anderen wird der Energiebedarf zur Beheizung der Emulsion sowie bei der Kondensation des Wärmedampfes bei gleichzeitiger Erhöhung des Wirkungsgrades durch die Erfindung in erheblichem Maße herabgesetzt, so daß die Erfindung zusammenfassend als eine ganz erhebliche Bereicherung des Standes der Technik auf dem Gebiet der Trennung von Emulsionen anzusehen ist.

### BEZUGSZEICHENLISTE

- 1: Phasentrennanlage
- 2: Behälter
- 3: Emulsion
- 4: Heizelement
- 5: Zulauf
- 6: Ablauf
- 7: Rührwerk
- 8: Abzug
- 9: Kondensator
- 10: Wärmetauscherwicklung
- 11: Hochdruckgebläse
- 12: Rückführung
- 13: Rohranordnung
- 14: Austrittsöffnung
- 15: Verschluß
- 16: Querverbindung
- 17: Temperaturregeleinrichtung
- 18: Sprühdüsenanordnung
- 19: Siphon
- 20: Rohr
- 21: Anschluß

## Patentansprüche

1. Verfahren zur thermischen Trennung einer Wasser-/Ölemulsion, bei dem die Emulsion in einem Behälter erhitzt wird, Luft im Bodenbereich des Behälters über eine flächig verteilte Rohranordnung mit einzelnen Austrittsöffnungen eingeleitet wird, so daß sich feinverteilte Luftbläschen bilden und das gesamte Volumen der Emulsion durchströmen, und bei dem Wasserdampfschwaden an der Oberseite des Behälters abgeführt werden.

2. Verfahren nach Anspruch 1,
**dadurch gekennzeichnet**,
daß die Luft nach Durchströmen einer Rückführung (12) und einer Rohranordnung (13) über einen Abzug (8) abgeführt wird.

3. Verfahren nach einem der vorhergehenden Ansprüche,
**dadurch gekennzeichnet**,
daß die Rückführung der Luft über ein angeordnetes Hochdruckgebläse (11) erfolgt.

4. Verfahren nach einem der vorhergehenden Ansprüche,
**dadurch gekennzeichnet**,
daß ein Umrühren der Wasser-/Ölemulsion durch ein Rührwerk (7) erfolgt.

5. Verfahren nach einem der vorhergehenden Ansprüche,
**dadurch gekennzeichnet**, daß eine Regelung der Temperatur eines Heizelementes (4) in Abhängigkeit von der Temperatur der Wasser-/Ölemulsion vorgenommen wird.

## Claims

1. Method for the thermal separation of a water/oil emulsion in which the emulsion is heated in a container, air is admitted to a base region of the container by means of a two-dimensionally distributed pipe arrangement with individual outlet openings, so that finely-divided air-bubbles are formed and flow through the entire volume of the emulsion, and in which water vapour is exhausted at the top of the container.

2. Method according to Claim 1,
**characterized in that**
after flowing through a recirculation duct (12) and a pipe arrangement (13) the air is exhausted via an outlet (8).

3. Method according to any one of the preceding claims,
**characterized in that**
the air is recirculated by means of a high-pressure blower (11) provided.

4. Method according to any one of the preceding Claims,
**characterized in that**
the water-oil emulsion is stirred by means of a stirrer (7).

5. Method according to any one of the preceding claims,
**characterized in that**
the temperature of a heating element (4) is regulated in dependence on the temperature of the water/oil emulsion.

## Revendications

1. Procédé pour la séparation thermique d'une émulsion eau-huile, dans lequel l'émulsion est chauffée dans un récipient et de l'air est introduit dans la région du fond du récipient par un ordonnancement de tubes répartis en une nappe et comportant des ouvertures de sortie distinctes, de sorte que des bulles d'air finement divisées se forment et circulent à travers l'ensemble du volume de l'émulsion, et dans lequel des émanations de vapeur d'eau sont évacuées à la face supérieure du récipient.

2. Procédé selon la revendication 1, **caractérisé en ce que**
l'air est évacué, après avoir circulé à travers un conduit de renvoi (12) et un ordonnancement de tubes (13), par l'intermédiaire d'un échappement (8).

3. Procédé selon l'une quelconque des revendications précédentes, **caractérisé en ce que** le renvoi de l'air s'effectue par l'intermédiaire d'une soufflerie aménagée à haute pression (11).

4. Procédé selon l'une quelconque des revendications précédentes, **caractérisé en ce que** l'émulsion eau-huile est soumise à un brassage au moyen d'un agitateur (7).

5. Procédé selon l'une quelconque des revendications précédentes, **caractérisé en ce que** l'on effectue une régulation de la température d'un élément de chauffage (4) en fonction de la température de l'émulsion eau-huile.
